# EUROPÄISCHE PATENTSCHRIFT

(11) **EP 1 316 735 B1**
(45) Veröffentlichungstag und Bekanntmachung des Hinweises auf die Patenterteilung: **01.10.2008**
(21) Anmeldenummer: 02025782.0
(22) Anmeldetag: 16.11.2002
(51) Int. Cl.: F16C 29/06, B62J 1/06, B62J 1/08

(54) **Sattelstütze**
Seat pillar
Tube porte-selle

(30) Priorität: 01.12.2001 DE 10159141
(43) Veröffentlichungstag der Anmeldung: 04.06.2003
(73) Patentinhaber: Schaeffler KG, 91074 Herzogenaurach (DE)
(72) Erfinder: Daniel, Patrick, 66459 Kirkel (DE); Kleber, Rainer, 66280 Sulzbach (DE)

(56) Entgegenhaltungen:
- EP-A- 1 215 113
- DE-C- 954 382
- DE-U- 20 102 011

## Beschreibung

Die vorliegende Erfindung betrifft eine Sattelstütze zur Befestigung eines Sattels eines Fahrzeugs, insbesondere eines Zweirads.

Zur Verbesserung des Komforts werden seit einiger Zeit Fahrräder angeboten, bei denen der Sattel gefedert und gedämpft ist. In den Fahrradrahmen eingeleitete Stöße aufgrund Unebenheiten in der Fahrbahn werden demzufolge nicht unmittelbar in den Sattel übertragen, sondern vielmehr abgefedert und gedämpft. Aus DE 201 02 011 U1 beispielsweise ist eine Sattelstütze gemäß dem oberbegriff des Auspruchs 1 bekannt geworden, bei der ein inneres Rohr und äußeres Rohr mit jeweils kreisringförmigen Querschnitt vorgesehen sind. Der Außendurchmesser des inneren Rohres ist kleiner als der Innendurchmesser des äußeren Rohres. Das äußere Rohr umschließt das innere Rohr bereichsweise unter Ausbildung eines ringförmigen Spaltes. Im Spalt sind Kugeln angeordnet, so dass das innere Rohr und das äußere Rohr relativ zueinander linear verschiebbar sind. Statt den Kugeln können auch Rollen oder andere Wälzkörper vorgesehen sein. Die Kugeln werden mit Hilfe von Laufbahnplatten geführt, die in das innere Rohr bzw. in das äußere Rohr eingefügt sind und in Axialrichtung verlaufende Vertiefungen aufweisen. Das äußere Rohr weist auf seiner inneren Mantelfläche zwei Laufbahnplatten auf, die um 180° versetzt zueinander angeordnet sind. Das innere Rohr ist demzufolge einwandfrei an dem äußeren Rohr linear gelagert. Nachteilig bei dieser bekannten Wälzlagerung ist jedoch, dass nur ein begrenzter Verfahrweg möglich ist. Die Grenze des Verfahrwerks ist dann erreicht, wenn die Kugeln oder andere Wälzkörper am Ende der Laufbahnplatten angelangt sind. Ein weiterer Nachteil kann darin gesehen werden, dass im Betrieb die Kugeln aufgrund von Schwingungen und unter der Einwirkung der Schwerkraft allmählich nach unten rutschen, so dass ein einwandfreies Verschieben nicht mehr gewährleistet ist.

Aufgabe der vorliegenden Erfindung ist es daher, eine Sattelstütze nach den Merkmalen des Oberbegriffs des Anspruchs 1 anzugeben, bei der eine einwandfreie Lagerung gewährleistet ist. Erfindungsgemäß wird diese Aufgabe durch die Merkmale des Auspruchs 1 gelöst. Dabei ist die Wälzlagerung durch eine Linearlagereinheit mit Wälzkörperrückführung gebildet, wobei Wälzkörper an Wälzkörperlaufbahnen abwälzen, von denen mindestens eine an der Linearlagereinheit und von denen mindestens eine andere an dem Innenteil ausgebildet ist. Ein wesentlicher Vorteil der erfindungsgemäßen Sattelstütze besteht darin, dass ein theoretisch unbegrenzter Verfahrweg zur Verfügung steht. Linearlagereinheiten mit Wälzkörperrückführungen an sich sind seit langem bekannt. Aufgrund ihrer platzsparenden Bauweise können sie jedoch im Zusammenspiel mit entsprechenden Modifikationen an dem inneren Rohr und dem äußeren Rohr wesentlich zur Erhöhung des Komforts beitragen. Denn beispielsweise ist es bei der erfindungsgemäßen Sattelstütze problemlos möglich, Federn mit unterschiedlich großen Federweg einzusetzen, ohne das der Federweg auf den maximalen Verfahrweg der Wälzlagerung abgestimmt sein müsste. Außerdem bedarf es keinerlei Maßnahmen an dem Außenteil zur Ausbildung einer Wälzkörperlaufbahn, da diese bereits an der Linearlagereinheit vorgesehen ist.

Das vorzugsweise rohrförmig ausgebildete Außenteil weist eine Aufnahme auf in der die Linearlagereinheit befestigt ist. Die Aufnahme kann beispielsweise dadurch gebildet sein, dass in das rohrförmig ausgebildete Außenteil ein Absatz eingearbeitet ist, der an seinem innenliegenden axialen Ende durch eine Schulter begrenzt ist. Die Linearlagereinheit kann nun problemlos in die Aufnahme beispielsweise eingepreßt werden, bis sie an der Schulter anschlägt und dort ihre endgültige Position erreicht hat.

Als Innenteil kann beispielsweise ein Rohr mit glatter zylindrischer äußerer Mantelfläche verwendet werden, wobei die Wälzkörperlaufbahn unmittelbar durch die zylindrische Mantelfläche gebildet sein kann. In diesem Fall eignen sich sogenannte Kugelumlaufbüchsen als Linearlagereinheiten mit Wälzkörperrückführung in besonderer Weise: Denn derartige Kugelumlaufbüchsen eigenen sich zugleich für eine Drehmomentübertragung, selbst wenn die Welle wie hier mit einer glatten zylindrischen Mantelfläche versehen ist. Als Wälzkörper sind in diesem Fall Kugeln vorgesehen, die an der zylindrischen Mantelfläche abwälzen. Eine erfindungsgemäße Variante sieht vor, dass in die zylindrische Mantelfläche des Innenteils in Achsrichtung Kugelrillen eingearbeitet sind, an denen die Kugeln abwälzen. Bei dieser Variante ist eine Drehmomentübertragung aufgrund der Ausbildung der Laufbahn als Kugelrille einwandfrei gewährleistet. Auch hier sind Kugelumlaufbüchsen in besonderer Weise geeignet.

Derartige Kugelumlaufbüchsen weisen vorzugsweise eine Außenhülse auf, die in die eingangs erwähnte Aufnahme des Außenteils eingepreßt sein kann. Das Herstellen der erfindungsgemäßen Sattelstütze ist also in besonders einfacher Weise möglich. Um eine Momentenbelastung der Linearlagereinheit mit Wälzkörperrückführung um eine Achse quer zur Längsachse möglichst gering zu halten, sieht eine erfindungsgemäße Variante vor, dass zwei Linearlagereinheiten mit axialem Abstand zueinander vorgesehen sind.

Nachstehend wird die Erfindung anhand von zwei in insgesamt vier Figuren dargestellten Ausführungsbeispielen näher erläutert. Es zeigen:
Figur 1 einen Längsschnitt durch eine erfindungsgemäße Sattelstütze;
Figur 2 eine Ausschnitt der erfindungsgemäßen Sattelstütze aus Figur 1 in perspektivischer Darstellung;
Figur 3 einen Längsschnitt durch die erfindungsgemäße Sattelstütze gemäß Figur 2 und
Figur 4 einen Querschnitt durch die erfindungsgemäße Sattelstütze nach Figur 3, jedoch mit modifiziertem inneren Rohr.

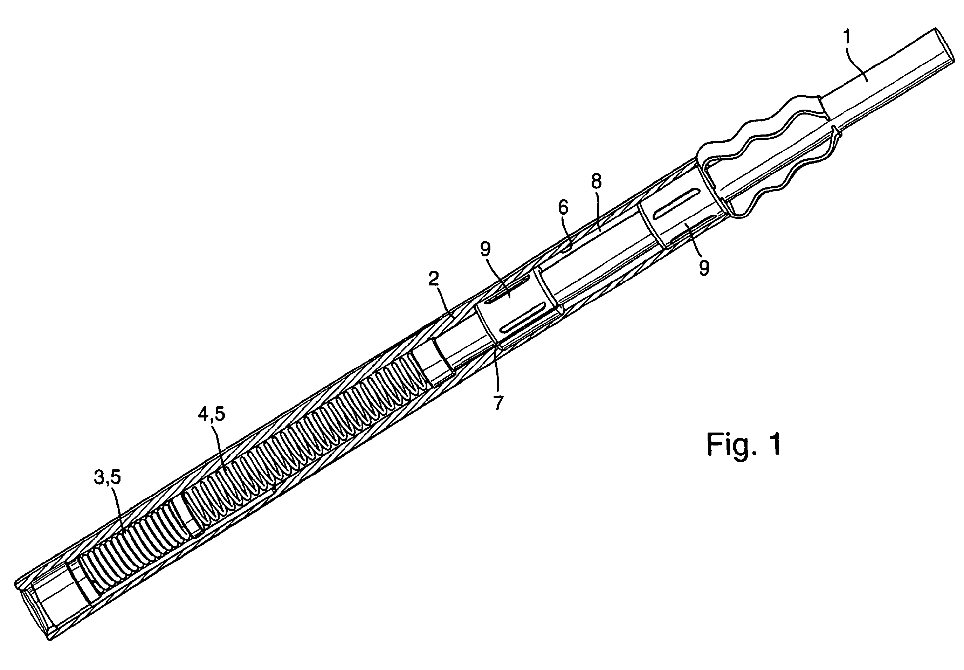

Die in den Figuren 1, 2, 3 abgebildete erfindungsgemäße Sattelstütze umfasst ein inneres Rohr 1, das in eine äußeres Rohr 2 eingeführt ist. Am oberen Ende des inneren Rohres 1 ist ein nicht dargestellter Sattel befestigt werden. Das äußere Rohr 2 kann in üblicher Weise in das nicht dargestellte Sattelrohr des Fahrrades eingeführt und darin festgeklemmt werden. Im Inneren des äußeren Rohres 2 sind zwei axial hintereinander angeordnete Schraubendruckfedern 3 und 4 unterschiedlicher Federsteifigkeit angeordnet. Durch die hier vorgeschlagene Reihenanordnung der Schraubendruckfedern 3, 4 wird eine progressive Kennlinie des Federsystems erreicht. Dieses aus den Schraubendruckfedern 3, 4 gebildete Federelement 5 ist einerseits an dem äußeren Rohr 2 abgestützt und andererseits gegen das innere Rohr 1 axial angefedert. In das äußere Rohr 2 ist ein Absatz 6 eingearbeitet, der durch eine Schulter 7 axial begrenzt ist. In dem von dem Absatz 6 und dem inneren Rohr 1 gebildeten Ringspalt 8 sind zwei mit axialen Abstand zueinander angeordnete Kugelumlaufbüchsen 9 eingeführt. Die weiter innen liegende Kugelumlaufbüchse 9 ist soweit in den Absatz 6 eingeführt, bzw. eingepreßt, bis sie an die Schulter 7 anschlägt und dort ihren Sitz erreicht. Die am Rohreintritt angeordnete Kugelumlaufbüchse 9 ist vorliegend soweit in den Absatz 6 eingepreßt, bis deren axiales Ende in etwa in einer Ebene mit dem axialen Ende des äußeren Rohres 2 liegt.

Die Kugelumlaufbüchse 9 umfasst eine Hülse 10, in der ein Käfig 11 angeordnet ist. In bekannter Weise ist der Käfig 11 mit Nuten 12 für eine Kugelumlaufführung versehen. In den Nuten 12 sind Kugeln 13 angeordnet. Während eines kompletten Kugelumlaufs durchläuft jede Kugel 13 einen Lastabschnitt, in dem sie einerseits an einer Kugelrille 13a des inneren Rohres 1 und andererseits an einer Kugelrille 14 der Hülse 10 abwälzt. Die Kugelrille 14 ist am Innenumfang der Hülse 10 ausgebildet. Die Kugelrille 13a ist in Achsrichtung in die Mantelfläche des inneren Rohres 1 eingearbeitet. Vorzugsweise weist das innere Rohr 1 mehrere über den Umfang verteilt angeordnete Kugelrillen 13a auf. In einem Rückführungsabschnitt wälzen die Kugeln 13 in der Nut 12 des Käfigs 11 ab und greifen mit einem Teil ihres Umfangs in Freistellungen 15 ein, die an der Hülse 10 ausgebildet sind.

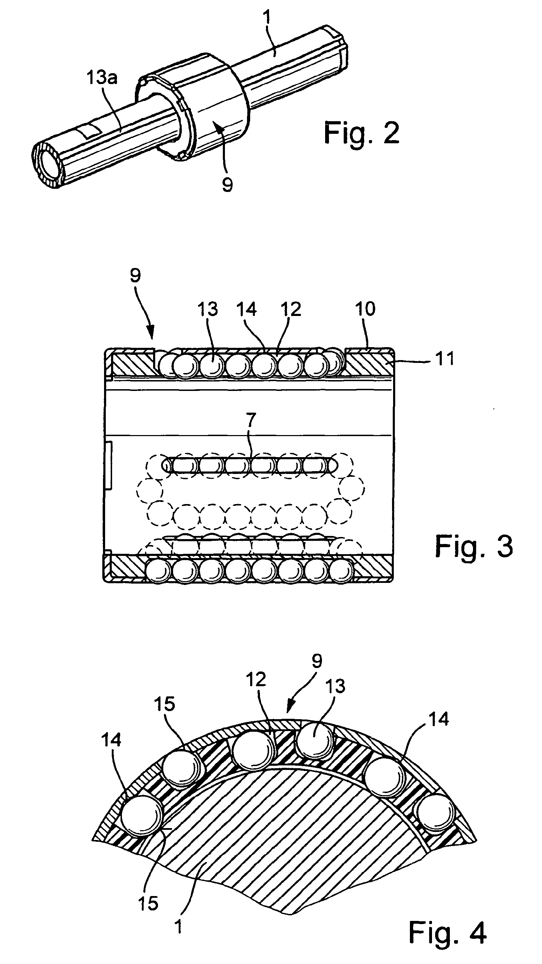

In Figur 4 ist abweichend zur Figur 2 ein inneres Rohr 1 mit glatter zylindrischer Mantelfläche vorgesehen. Die Kugeln 13 wälzen somit in dem Lastabschnitt direkt an der zylindrischen Mantelfläche des inneren Rohres 1 ab. Die zylindrische Mantelfläche des inneren Rohres 1 bildet demzufolge zugleich eine Wälzkörperlaufbahn 15 für die Kugeln 13. Die Relativverschiebung zwischen dem inneren Rohr 1 und dem äußeren Rohr 2 ist begrenzt durch den Federweg des Federelementes 5, bzw. durch die teleskopartige Anordnung der Rohre 1, 2 nicht aber durch die Kugelumlaufbüchsen 9, die eine unbegrenzte Verschiebung zulassen.

### Positionszahlenliste

- 1: inneres Rohr
- 2: äußeres Rohr
- 3: Schraubendruckfeder
- 4: Schraubendruckfeder
- 5: Federelement
- 6: Absatz
- 7: Schulter
- 8: Ringspalt
- 9: Kugelumlaufbüchse
- 10: Hülse
- 11: Käfig
- 12: Nut
- 13: Kugel
- 13a: Kugelrille
- 14: Kugelrille
- 15: Wälzkörperlaufbahn

## Patentansprüche

1. Sattelstütze zur Befestigung eines Sattels eines Fahrzeugs, insbesondere eines Zweirads, mit einem Außenteil (2), das ein den Sattel aufnehmendes Innenteil (1) wenigstens bereichsweise unter Ausbildung eines Spaltes (8) umschließt, wobei in dem Spalt eine Wälzlagerung zur linearen Lagerung des Innenteils (1) gegenüber dem Außenteil (2) vorgesehen ist, wobei ein in Lagerungsrichtung wirksames Federelement (5) zur Federung des Innenteils (1) vorgesehen ist, **dadurch gekennzeichnet, daß** die Wälzlagerung durch eine Linearlagereinheit (9) mit Wälzkörperrückführung gebildet ist, wobei Wälzkörper (13) an Wälzkörperlaufbahnen (14, 13a, 15) abwälzen, von denen mindestens eine an der Linearlagereinheit (9) und von denen mindestens eine andere an dem Innenteil (1) ausgebildet ist, wobei die Linearlagereinheit (9) in einer Aufnahme des Außenteils (1) befestigt ist, und wobei die Linearlagereinheit durch eine Kugelumlaufbüchse (9) gebildet ist, die eine Hülse (10) und einen in der Hülse (10) angeordneten Käfig (11) mit Nuten (12) für eine Kugelumlaufführung aufweist.

2. Sattelstütze nach Anspruch 1, bei der das Innenteil (1) eine zylindrische Mantelfläche aufweist.

3. Sattelstütze nach Anspruch 2, bei der die dem Innenteil (1) zugeordnete Wälzkörperlaufbahn (15) unmittelbar durch die zylindrische Mantelfläche gebildet ist.

4. Sattelstütze nach Anspruch 2, bei der die dem Innenteil (1) zugeordnete Wälzkörperlaufbahn durch eine in die zylindrische Mantelfläche eingeformte Kugelrille (13a) gebildet ist, an der die Wälzkörper bildende Kugeln (13) abwälzen.

5. Sattelstütze nach Anspruch 1, bei der das Innenteil (1) in dem rohrförmig ausgebildeten Außenteil (2) angeordnet ist, wobei zwischen dem Innenteil (1) und dem Außenteil (2) ein Ringraum (8) gebildet ist, in dem die Linearlagereinheit (9) aufgenommen ist.

6. Sattelstütze nach Anspruch 1, bei der die Kugelumlaufbüchse (9) eine Außenhülse (10) aufweist, die in eine Aufnahme des Außenteils (2) eingepreßt ist.

7. Sattelstütze nach Anspruch 1, bei der in Lagerungsrichtung mit axialem Abstand zueinander zwei Linearlagereinheiten (9) angeordnet sind.

## Claims

1. Seat pillar for the securing of a saddle of a vehicle, in particular of a bicycle, with an outer part (2) which surrounds at least some regions of an inner part (1) accommodating the saddle, with a gap (8) being formed, wherein a rolling mounting for the linear mounting of the inner part (1) in relation to the outer part (2) is provided in the gap, and wherein a spring element (5) which is effective in the mounting direction and is intended for the spring mounting of the inner part (1) is provided, **characterized in that** the rolling mounting is formed by a linear bearing unit (9) with recirculation of the rolling bodies, the rolling bodies (13) rolling along rolling body running tracks (14, 13a, 15), of which at least one is formed on the linear bearing unit (9) and of which at least another is formed on the inner part (1), the linear bearing unit (9) being fastened in a receptacle of the outer part (1), and the linear bearing unit being formed by a recirculating ball bushing (9) which has a sleeve (10) and a cage (11) which is arranged in the sleeve (10) and has grooves (12) for guiding the recirculating balls.

2. Seat pillar according to Claim 1, in which the inner part (1) has a cylindrical circumferential surface.

3. Seat pillar according to Claim 2, in which the rolling body running track (15) assigned to the inner part (1) is directly formed by the cylindrical circumferential surface.

4. Seat pillar according to Claim 2, in which the rolling body running track assigned to the inner part (1) is formed by a ball channel (13a) which is formed in the cylindrical circumferential surface and along which balls (13) forming the rolling bodies roll.

5. Seat pillar according to Claim 1, in which the inner part (1) is arranged in the outer part (2) which is of tubular design, with an annular space (8) in which the linear bearing unit (9) is accommodated being formed between the inner part (1) and the outer part (2).

6. Seat pillar according to Claim 1, in which the recirculating ball bushing (9) has an outer sleeve (10) which is pressed into a receptacle of the outer part (2).

7. Seat pillar according to Claim 1, in which two linear bearing units (9) are arranged at an axial distance from each other in the mounting direction.

## Revendications

1. Tube porte-selle pour la fixation d'une selle d'un véhicule, en particulier d'une bicyclette, comprenant une pièce extérieure (2), qui entoure au moins localement, en formant un intervalle (8), une pièce intérieure (1) portant la selle, dans lequel il est prévu dans l'intervalle un palier de roulement pour le support linéaire de la pièce intérieure (1) par rapport à la pièce extérieure (2), dans lequel il est prévu un élément de ressort (5) agissant dans la direction de support pour la suspension de la pièce intérieure (1), **caractérisé en ce que** le palier de roulement est formé par une unité de palier linéaire (9) avec recirculation des corps de roulement, dans lequel des corps de roulement (13) roulent sur des pistes de roulement (14, 13a, 15) pour les corps de roulement, dont au moins une est formée sur l'unité de palier linéaire (9) et dont au moins une autre est formée sur la pièce intérieure (1), dans lequel l'unité de palier linéaire (9) est fixée dans un évidement de la pièce extérieure (2), et dans lequel l'unité de palier linéaire est formée par un coussinet à recirculation de billes (9), qui comprend une douille (10) et une cage (11), disposée dans la douille (10), avec des rainures (12) permettant la recirculation de billes.

2. Tube porte-selle selon la revendication 1, dans lequel la pièce intérieure (1) présente une surface latérale cylindrique.

3. Tube porte-selle selon la revendication 2, dans lequel la piste de roulement (15) pour des corps de roulement associée à la pièce intérieure (1) est formée directement par la surface latérale cylindrique.

4. Tube porte-selle selon la revendication 2, dans lequel la piste de roulement de corps de roulement associée à la pièce intérieure (1) est formée par un canal à billes (13a) pratiqué dans la surface latérale cylindrique, et dans lequel roulent les billes (13) formant les corps de roulement.

5. Tube porte-selle selon la revendication 1, dans lequel la pièce intérieure (1) est disposée dans la pièce extérieure (2) de forme tubulaire, dans lequel un espace annulaire (8) est formé entre la pièce intérieure (1) et la pièce extérieure (2), dans lequel l'unité de palier linéaire (9) est installée.

6. Tube porte-selle selon la revendication 1, dans lequel le coussinet à recirculation de billes (9) comprend une douille extérieure (10), qui est sertie dans un logement de la pièce extérieure (2).

7. Tube porte-selle selon la revendication 1, dans lequel deux unités de palier linéaire (9) sont disposées dans la direction de support, avec un écart axial entre elles.
